Europäisches Patentamt

European Patent Office

Office européen des brevets

(19)

(11) **EP 1 309 177 A2**

(12) **EUROPEAN PATENT APPLICATION**

(43) Date of publication:
07.05.2003 Bulletin 2003/19

(51) Int Cl.[7]: **H04N 1/60**

(21) Application number: 02079360.0

(22) Date of filing: 21.10.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **02.11.2001 US 967**

(71) Applicant: **EASTMAN KODAK COMPANY**
**Rochester, New York 14650 (US)**

(72) Inventors:
• **Miller, William G.**
**Rochester, New York 14650-2201 (US)**
• **Erwin, James C.**
**Rochester, New York 14650-2201 (US)**

(74) Representative: **Parent, Yves et al**
**KODAK INDUSTRIE,**
**Département Brevets,**
**CRT - Zone Industrielle**
**71102 Chalon-sur-Saône Cedex (FR)**

(54) **Calibration method for printing apparatus using photosensitive media**

(57)    A method for mapping a limited number of input data values to a larger number of output exposure values for an clectro-optical exposure device in a printing system (10) for photosensitive medium (30) in which, based on a computed contrast ratio for the photosensitive medium (30), the electro-optical exposure device is profiled and its output exposure energy curve adjusted to obtain the desired exposure energy over the range of input values.

FIG. 1

**Description**

This invention generally relates to a printing apparatus for photosensitive media and more particularly to a method for mapping a digital data input value to an output exposure energy level wherein the number of possible output exposure energy levels exceeds the number of available digital data input values.

For imaging onto photosensitive media, a variable output density is obtained over an area of an image by applying a variable exposure energy to that area. Exposure is defined as the product of irradiance *I* that is applied to the photosensitive media and the time *t* during which the irradiance is applied, which is expressed as:

$$E = It$$

Typical units for irradiance are ergs $sec^{-1}cm^{-2}$ or watt $cm^{-2}$.

In digital imaging, an image is formed as a two-dimensional array of multiple pixels and exposure energy, at one of a number of available levels, is applied to each pixel in order to form a complete image. Among factors that are of particular importance in achieving image quality is printer calibration, by which a specific digital data input value results in a specific density output value. A properly calibrated digital printer yields well-controlled image density throughout a range of densities in the output image.

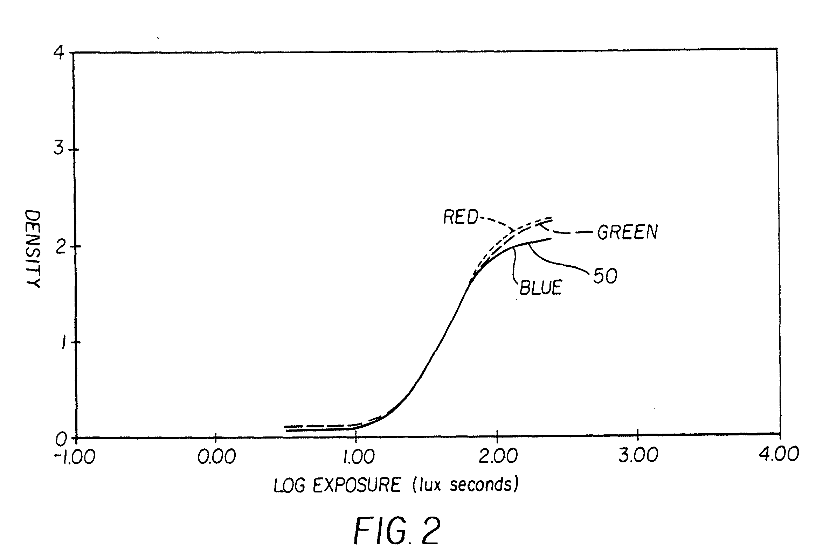

The sensitometric characteristics of photosensitive media are well-established, as is exemplified in the relationship of input exposure to output density for the photosensitive paper illustrated in Figure 2. As the familiar D-logE curve of Figure 2 shows, there is generally a logarithmic relationship of exposure level to output density over the useful range of the media.

The necessary task of calibrating a printer to a specific photosensitive media can prove to be very time-intensive. Effective calibration must not only adjust exposure levels applied within the printer for achieving the target densities on a specific medium, but can also require continual fine tuning, such as may be needed to compensate for batch-to-batch differences from manufacture of the photosensitive medium. In the digital imaging arts, the benefits of achieving a close first approximation for calibration to a specific photosensitive medium can be well appreciated. With an approximate calibration adjustment for a photosensitive medium applied, subsequent compensation for expected batch-to-batch differences can be more easily achieved.

Due to continuing performance improvements and decreasing costs, spatial light modulators, such as liquid crystal devices (LCDs), rank high among candidate printer technologies for applying exposure energy onto photosensitive media. In order to use less costly LCDs within a printer, a designer must adapt to some inherent limitations of these devices. Among well-known limitations for conventional LCD devices and their interfaces are constraints on the available "bit depth." For example, it may be possible for some image data handling devices in the imaging path to process 12-bit image data, however, a conventional design may be limited to accepting and processing 8-bit image data. In some cases, such a constraint may not be directly due to limitations of the LCD device itself, but might rather be due to limitations of hardware in the interface data path to the LCD. To compensate for image data width constraints in calibration, it is often necessary to provide a mapping scheme that correlates a smaller number of possible input image data values (m) to a larger number of possible output exposure values (*n*).

Conventional approaches that achieve an *m:n* correlation include a number of methods disclosed for improvements to image processing with xerographic and inkjet printers. For example, U.S. Patent Nos. 5,608,821; 6,233,360; and 6,203,133, disclose methods for increasing gray level resolution from *m* input bits to a higher bit value *n* where *n>m*. These methods take advantage of an increased spatial addressibility of pixels when using the specific print engine type. Similarly, U.S. Patent Nos. 5,760,918 and 5,917,963 disclose methods for mapping *m* input density levels to *n* output density levels. U.S. Patent No. 6,147,771 discloses multiple conversions of an image from lower to higher density resolutions for adjusting gray level and gamma. Conversely, methods have also been disclosed for converting image data from an original m-bit value to a lower n-bit value for use with lower resolution imaging devices, such as is described in U.S. Patent Nos. 6,118,547; 5,870,503; and 5,515,180.

The conventional approaches for *m:n* mapping, however, do not provide a suitable solution for printer density calibration to one or more types of photosensitive media. With photosensitive media, variable densities are not achieved by varying spatial distribution of pixels; instead, variable density is obtained by varying the exposure applied to pixels. Different media types, such as different types of photographic print paper, for example, exhibit different density response to a given set of exposure characteristics. A printer that exposes photosensitive media would offer advantages if it were capable of accepting different media types. Moreover, calibration for different media types would be most useful if it could be performed and stored on the printer before it is shipped to a customer.

Thus, it can be seen that there is a need for an improved method that calibrates a printer to provide, for each of a number of input data values, a corresponding output exposure level, wherein the output exposure level obtains a desired density on a specific photosensitive medium and wherein the output exposure level is determined based upon the response of the photosensitive medium to the exposure device.

It is an object of the present invention to provide, in a printing apparatus that employs an electro-optical exposure device for forming, on a photosensitive medium, pixels having an output density ranging from a minimum density to a maximum density, an exposure energy that varies according to an input data value based on a predetermined exposure-to-density correlation, a method of mapping a set of m input data values to a larger set of $n$ discrete exposure energy levels obtainable from said electro-optical exposure device, the method comprising:

(a) obtaining the larger set of $n$ discrete exposure energy levels by iteratively providing each of $n$ device data values to the electro-optical exposure device and measuring, for each of $n$ device data values, the corresponding discrete exposure energy level;

(b) identifying a maximum discrete exposure energy level from the larger set of n discrete exposure energy levels and normalizing each of $n$ discrete exposure energy levels with respect to the maximum discrete exposure energy level to create a set of n normalized exposure energy levels;

(c) correlating each $n$ device data value to a corresponding output density in monotonically increasing order to create the larger set of $n$ discrete exposure energy levels by:

(c1) correlating the maximum normalized exposure energy level to the maximum density;

(c2) iteratively correlating each remaining normalized exposure energy level to the corresponding output density, conditioned by known density response characteristics of the photosensitive medium; and

(d) correlating the set of $m$ input data values to the larger set of $n$ discrete exposure energy levels based on the predetermined exposure-to-density correlation.

A feature of the method of the present invention is that it uses exposure response characteristics of a photosensitive medium to determine a corresponding contrast ratio required of printer exposure energy for that medium. The present invention adjusts the behavior of the printer exposure apparatus to optimize the range of exposure output levels provided, then provides a technique for mapping input image data values to output exposure energy levels. The present invention provides a method for adapting this mapping to compensate for variations in visual response between any two values of exposure energy.

It is an advantage of the present invention that it provides a method for conditioning printer density output response that minimizes the number of iterations needed for tone scale calibration.

It is an advantage of the present invention that it provides a printing apparatus with look-up table data for any number of photosensitive media. This enables a printing apparatus to adapt its output exposure to the characteristics of any one of a number of photosensitive media types.

It is a further advantage of the present invention that it provides a method for mapping a limited number of input image data values to a larger number of possible output exposure values.

These and other objects, features, and advantages of the present invention will become apparent to those skilled in the art upon a reading of the following detailed description when taken in conjunction with the drawings wherein there is shown and described an illustrative embodiment of the invention.

While the specification concludes with claims particularly pointing and distinctly claiming the subject matter of the present invention, it is believed that the invention will be better understood from the following description when taken in conjunction with the accompanying drawings, wherein:

Figure 1 is a schematic block diagram showing key components of a printing apparatus using the method of the present invention;

Figure 2 is a graph showing a typical set of density response curves for given exposure energy input;

Figure 3 is a graph showing relative exposure energy of an electro-optical device of the printing apparatus of the present invention, with bias level set at two different values; and

Figure 4 is a logic diagram showing the basic steps used in the method of the present invention.

The present invention will be directed in particular to elements forming part of, or in cooperation more directly with the apparatus in accordance with the present invention. It is to be understood that elements not specifically shown or described may take various forms well known to those skilled in the art.

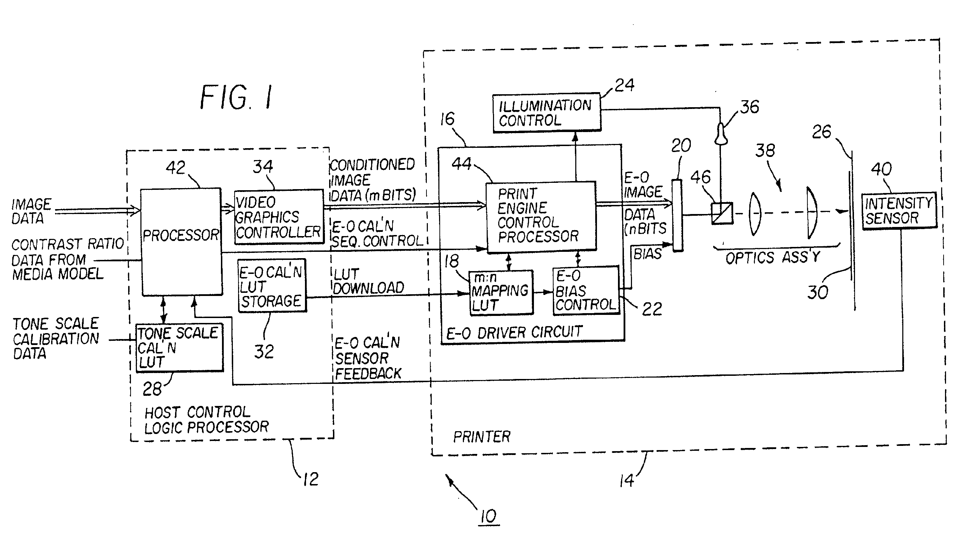

Referring now to Figure 1, there is shown a block diagram of a printing system 10 which uses the method of the present invention. Printing system 10 comprises a host control logic processor 12 which conditions and transfers image data and a printer 14 which acts as the print engine for forming an image onto a photosensitive medium 30.

Still referring to Figure 1, image data is received by host control logic processor 12. A processor 42 conditions the image data based on stored values from a tone scale calibration look-up table (LUT) memory 28, whose function is described below, and from an electro-optical (E-O) calibration LUT memory 32, whose contents are assembly as described herein. After this conditioning, processor 42 transfers the image data to a video graphics controller card 34 that is compatible with the hardware of the print engine formed by printer 14. Video graphics controller card 34 passes the image data to a print engine control processor 44 with an E-O device. Spatial light modulator 20 modulates light from a light source 36, the light directed in some way, such as by a beamsplitter 46. Spatial light modulator 20 forms a two-dimensional image which is directed through an optics assembly 38 onto a media plane 26. On media plane 26, photosensitive medium 30 is exposed in order to form the image.

In the apparatus shown in Figure 1, spatial light modulator 20 is capable of providing a range of modulation levels. In the preferred embodiment, for example, spatial light modulator 20 can provide any one of 640 output levels to an individual pixel. However, the conditioned image pixel data input to print engine control processor 44 from video graphics controller card 34 can only have one of only 256 values, since this data path allows only 8-bit resolution. Thus, in the case of the preferred embodiment, some method is needed for mapping the $m$ possible values of input data (0-255) to n possible exposure output levels (0-639) for each pixel. It can be readily appreciated that the method applied for $m{:}n$ mapping with specific values in the preferred embodiment can be used in the more general case, where variable $m$ and $n$ take other values. For the description given below, however, the values of $m$ and $n$ used in the preferred embodiment (that is, $m$ having 256 possible values; $n$ having 640) are employed to illustrate the method of the present invention.

Exposure-to-Density Relationship for Photosensitive Medium 30

Referring to Figure 2, there is shown the characteristic relationship of output density to input exposure for a typical photosensitive medium 30. As is well known in film sensitometry art, a density response curve 50 for silver-halide-based photosensitive medium 30 is typically plotted with exposure on a logarithmic scale to show the familiar D-logE relationship. This sensitometric relationship is similar for each red, green, and blue (RGB) component color, with differences between response for the different colors most accentuated at peak density (Dmax) and at minimum density (Dmin).

In an imaging application, exposures corresponding to minimum and maximum density values are used to provide a contrast ration, CR, for each color, simply:

$$CR = maximum\ exposure\ /\ minimum\ exposure$$

Using the photosensitive medium 30 of Figure 2, for example, where Dmax is 2.05 (with a log exposure value of 2.35) and Dmin is 0.09 (with a log exposure value of 0.978), the contrast ratio of 23.54 is needed for blue color, since the ratio of the corresponding exposure values is:

$$CR = 10^{2.35}\ /\ 10^{0.978} = 23.54$$

Referring back to Figure 1, the exposure energy modulated by spatial light modulator 20 must be able to provide the contrast ratio needed for each color.

Exposure Energy Characteristic of Spatial Light Modulator 20

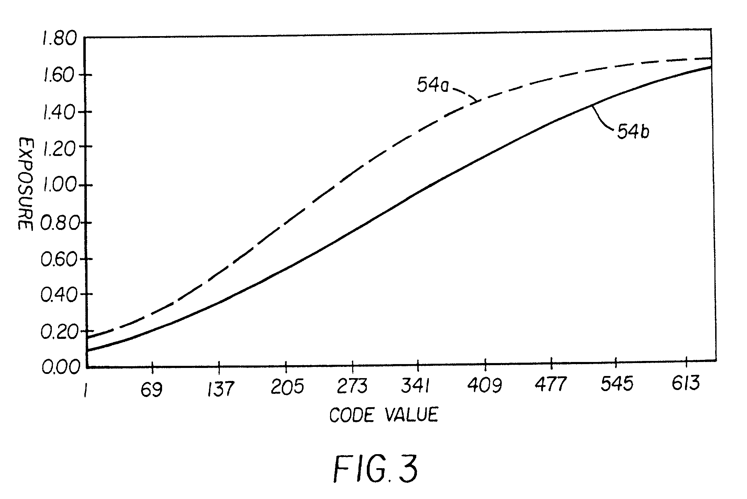

Referring to Figure 3 there is shown, as a set of electro-optic response curves 54a and 54b, the overall relationship of output exposure energy to input code values for a typical spatial light modulator 20 with a given light source and at two different bias voltage levels. Electro-optic response curve 54a shows the relative exposure output of spatial light modulator 20 for a first bias level provided by an E-O bias control circuit 22 (Figure 1) which is controlled by print engine control processor 44. At this first bias level, the relative exposure level ranges from a maximum of approximately 1.60 to a minimum of approximately 0.095. The resulting contrast ratio is then:

$$CR = 1.60/0.095 = 17{:}1\ (approx.)$$

For a second bias level, however, as is shown by electro-optic response curve 54b, a lesser contrast ratio of only 10:1 is obtained. Thus, it can be seen that selection of a proper bias voltage setting from E-O bias control circuit 22 helps to achieve the desired contrast ratio from spatial light modulator 20. Using the method of the present invention, empirical testing is employed to determine the most favorable bias setting for operation.

Referring back to Figure 1, it is instructive to note that the relative exposure energy level provided from spatial light modulator 20 is derived from a measurement sensed by an intensity sensor 40. Intensity sensor 40 can be any of a number of different types of photosensing devices. In a preferred embodiment, intensity sensor 40 is configured as a sensing circuit that provides an output voltage as a "raw energy" measurement that is proportional to the irradiance of incident exposure energy. Over the useful range of exposure energy levels of a preferred embodiment, for example, a typical voltage output from intensity sensor 40 may range between approximately 0.072 to 1.693 Vdc.

Process Flow for Creating LUT for a Medium

Comparing the response curves of Figures 2 and 3, it is clear that some predictable mapping of input code values to output density values is needed in order to calibrate printing system 10. In the simplest case, a linear relationship has advantages, whereby there is the same difference in density from one step to the next (that is, from one input code value *b* to the next higher code value *b + 1*). However, this is not typically the preferred relationship from an image quality perspective. The human eye is more responsive to abrupt density changes at different ranges. Thus, it may be beneficial to vary the density difference from one code value to the next over various ranges. In this way, smoother density transitions and more realistic gradients can be represented in the final image. While methods for determining the best step-to-step relationship are beyond the scope of the present invention, it is worthwhile to note that some scheme is followed for obtaining the desired density at each code value, in order to obtain proper calibration using the procedure that is described below.

Again referring to Figure 1, the calibration method of the present invention generates a LUT that is stored in E-O calibration LUT memory 32, one for each type of photosensitive media 30. The LUT provides an *m:n* mapping that correlates *m* input data values to a larger number of *n* device code values, where each of the *n* device code values, in turn, corresponds to each of *n* different possible exposure energy values that can be obtained from spatial light modulator 20. The LUT from E-O calibration LUT memory 32 also stores a bias voltage setting for spatial light modulator 20. This bias setting enables spatial light modulator 20 to obtain the desired level of contrast ratio for a specific type of photosensitive medium 30.

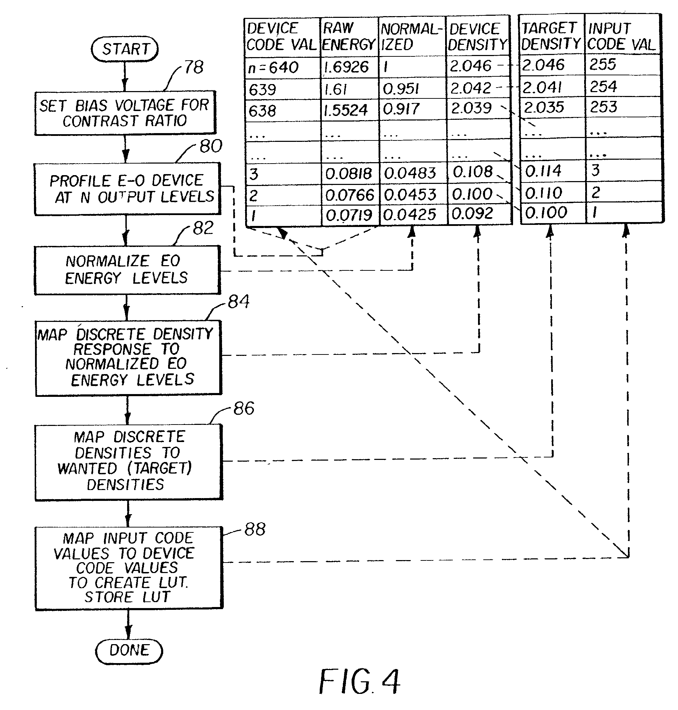

Referring to Figure 4, there is shown the overall sequence of steps used for creating a LUT that maps input code values to their corresponding device code values. Dotted lines trace the actions of individual steps and show the relation of each step towards achieving the desired mapping. It is instructive to note that the procedure of Figure 4 is executed for each type of photosensitive medium 30 to be used by printing system 10, and for each color component used.

In an initialization step 78, a bias setting is obtained for spatial light modulator 20. This bias setting, intended to be available in memory such as in *m:n* mapping LUT 18, determines contrast response characteristics of spatial light modulator 20.

In an E-O device profiling step 80, raw energy measurements are obtained from intensity sensor 40 (Figure 1) for each of the *n* device code values obtainable from spatial light modulator 20. In a preferred embodiment, for example, 640 different levels are available. Next, an optional normalization step 82 normalizes the raw energy values obtained in the preceding step to simplify calculation. A discrete density-to-normalized E-O levels mapping step 84 begins by correlating the peak raw energy value obtained in E-O device profiling step 80 with the maximum density desired from the specific photosensitive medium 30. With this maximum mapping established, each lesser raw energy value is correlated with a corresponding discrete density value, using the known response profile for the specific photosensitive medium 30 at the specified color. That is, sensitometric data for photosensitive medium 30 provided by the manufacturer, such as the curve in Figure 2, for example, are used to derive corresponding discrete density values that can be achieved by each normalized raw energy level achieved from spatial light modulator 20. As a result of this correlation, each of n device code values is then correlated to a corresponding discrete density.

Continuing with the sequence of Figure 4, a discrete-to-target densities mapping step 86 then correlates each of the *m* target densities needed for calibration of the printer to the specific photosensitive medium 30 to one of the *n* discrete densities calculated for the device code values. For discrete-to-target densities mapping step 86, it can be seen that some of the *n* discrete density values cannot be used. A number of algorithms can be used for mapping each of m target densities to one of the *n* discrete densities. The preferred embodiment uses a nearest-neighbor algorithm, however, other methods could be used within the scope of the present invention. An input code value-to-device code value step 88 then follows, simply correlating each of the *m* input code values to one of the *n* device code values based on the correlation done in preceding steps.

As Figure 4 suggests, the procedure of the present invention can be conceptualized as building a table where successive columns are added to each step, so that the result necessarily correlates the right-most column in the table (input code values) with the left-most column (device code values) to provide the mapping needed in an LUT.

It must be emphasized that the calibration method of the present invention must be performed separately for each type of photosensitive medium 30 to be used with printing system 10. In this way, when a specific type of photosensitive medium 30 is loaded into printing system 10, the proper LUT data can be transferred from E-O calibration LUT storage memory 32 to an *m:n* mapping LUT 18 for use by print engine control processor 44. At the same time, the proper bias voltage must be provided for using spatial light modulator 20 with the specific type of photosensitive medium 30.

The method of the present invention provides a pre-calibration of printing system 10 that can be performed and stored in E-O calibration LUT storage memory 32 during manufacture. Then, once printing system 10 is installed in the field, separate tone scale calibration can be used to generate a LUT stored and provided by tone scale calibration LUT memory 28.

It is worthwhile to note that the bias voltage setting to spatial light modulator 20 may also vary depending on the type of photosensitive medium 30 and depending further on the needed contrast ratio for the type of printing application. E-O calibration LUT storage memory 32 would also store at least one bias setting for each type of photosensitive medium 30 used in printer system 10. Illumination control 24 could also be adjusted to modify the intensity of light source 36 based on the type of photosensitive medium 30.

In the preferred embodiment, the method of the present invention is substantially automated and executed according to programmed instructions run by control logic processor 12. After executing the procedure of the present invention, *m:n* mapping LUT 18 is then loaded with the resulting values, enabling printing system 10 to automatically adapt its operation to any type of photosensitive medium 30 for which printing system 10 is programmed. Within the scope of the present invention, different parts of this process could be automatically or manually executed.

The invention has been described in detail with particular reference to certain preferred embodiments thereof, but it will be understood that variations and modifications can be effected within the scope of the invention as described above, and as noted in the appended claims, by a person of ordinary skill in the art without departing from the scope of the invention. For example, the method of the present invention could be used to index any number of possible input states to any of a plurality of output exposure levels. The present invention could alternately be employed where there are more possible input states than output exposure levels (that is, where *m>n*).

Thus, what is provided is a method for mapping a digital data input value to an output exposure energy level where the number of possible output exposure energy levels exceeds the number of available digital data input values.

**Claims**

1.  In a printing apparatus that employs an electro-optical exposure device for forming, on a photosensitive medium, pixels having an output density ranging from a minimum density to a maximum density, using an exposure energy that varies according to an input data value based on a predetermined exposure-to-density correlation, a method of mapping a set of m said input data values to a larger set of n discrete exposure energy levels obtainable from said electro-optical exposure device, the method comprising:

    (a) obtaining said larger set of n discrete exposure energy levels by iteratively providing each of n device data values to said electro-optical exposure device and measuring, for said each of said n device data values, the corresponding said discrete exposure energy level;
    (b) identifying a maximum discrete exposure energy level from said larger set of n discrete exposure energy levels and normalizing each of said n discrete exposure energy levels with respect to said maximum discrete exposure energy level to create a set of n normalized exposure energy levels;
    (c) correlating each said n device data value to a corresponding said output density in monotonically increasing order to create said larger set of n discrete exposure energy levels by:

    (c1) correlating a maximum normalized exposure energy level to said maximum density;
    (c2) iteratively correlating each remaining said normalized exposure energy level to said corresponding said output density;
    (c3) conditioning each of said normalized exposure energy levels by density response characteristics of said photosensitive medium; and

    (d) correlating said set of m said input data values to said larger set of n discrete exposure energy levels based on said predetermined exposure-to-density correlation.

2.  The method of claim 1 wherein the step of obtaining said larger set of n discrete exposure energy levels further comprises the step of adjusting bias a voltage supplied to said electro-optical exposure device.

3.  The method of claim 1 further comprising the step of adjusting a light intensity value based on said density response characteristic of said photosensitive medium.

FIG. 1

IMAGE DATA →
CONTRAST RATIO DATA FROM MEDIA MODEL →
TONE SCALE CALIBRATION DATA →

**HOST CONTROL LOGIC PROCESSOR** 12

- PROCESSOR 42
- VIDEO GRAPHICS CONTROLLER 34
- E-O CAL'N LUT STORAGE 32
- TONE SCALE CAL'N LUT 28

CONDITIONED IMAGE DATA (m BITS)
E-O CAL'N SEQ. CONTROL
LUT DOWNLOAD
E-O CAL'N SENSOR FEEDBACK

**PRINTER** 14

- ILLUMINATION CONTROL 24
- PRINT ENGINE CONTROL PROCESSOR 44 / 16
- E-O DRIVER CIRCUIT
  - m:n MAPPING LUT 18
  - E-O BIAS CONTROL 22

E-O IMAGE DATA (n BITS)
BIAS
20
46
36
38
OPTICS ASS'Y
30
26
INTENSITY SENSOR 40

10

EP 1 309 177 A2

FIG. 2

EP 1 309 177 A2

FIG. 3

| DEVICE CODE VAL | RAW ENERGY | NORMAL-IZED | DEVICE DENSITY | TARGET DENSITY | INPUT CODE VAL |
|---|---|---|---|---|---|
| n = 640 | 1.6926 | 1 | 2.046 | 2.046 | 255 |
| 639 | 1.61 | 0.951 | 2.042 | 2.041 | 254 |
| 638 | 1.5524 | 0.917 | 2.039 | 2.035 | 253 |
| ... | ... | ... | ... | ... | ... |
| ... | ... | ... | ... | ... | ... |
| 3 | 0.0818 | 0.0483 | 0.108 | 0.114 | 3 |
| 2 | 0.0766 | 0.0453 | 0.100 | 0.110 | 2 |
| 1 | 0.0719 | 0.0425 | 0.092 | 0.100 | 1 |

START

SET BIAS VOLTAGE FOR CONTRAST RATIO — 78

PROFILE E-O DEVICE AT N OUTPUT LEVELS — 80

NORMALIZE EO ENERGY LEVELS — 82

MAP DISCRETE DENSITY RESPONSE TO NORMALIZED EO ENERGY LEVELS — 84

MAP DISCRETE DENSITIES TO WANTED (TARGET) DENSITIES — 86

MAP INPUT CODE VALUES TO DEVICE CODE VALUES TO CREATE LUT. STORE LUT — 88

DONE

FIG.4